# EUROPEAN PATENT APPLICATION

(11) **EP 2 976 940 A1**
(43) Date of publication of application: **27.01.2016**
(21) Application number: 15176675.5
(22) Date of filing: 14.07.2015
(51) Int. Cl.: A01G 23/06

(54) **STUMP GRINDER**

(30) Priority: 24.07.2014 BE 201400575
(71) Applicant: JO Beau Products BVBA, 8200 Brugge (BE)
(72) Inventor: Beauprez, Jozef, 8200 Sint-Andries (BE)
(74) Representative: D'Halleweyn, Nele Veerle Trees Gertrudis

(57) **Abstract**

Stump grinder comprising a chassis (10) having a front side (11); a grinder arm (30) which is provided on an outer end (31) with a grinder (20) and which is connected on another outer end (32) to the chassis (10) by means of a rotating head (40); wherein the rotating head (40) is provided on a front side (11) of the chassis (10) and the rotating head (40) comprises a first rotating cylinder (41) and a second rotating cylinder (42), wherein the first rotating cylinder (41) is mounted for moving the grinder arm (30) up and downward round a horizontal axis (A1) and the second rotating cylinder (42) is mounted for pivoting the grinder arm (30) round a vertical or inclining axis (A2).

## Description

### Field of the invention

The present invention relates to a mobile device for grinding away tree stumps and the like, also referred to as stump grinder, comprising a chassis displaceable on displacing means and having a front side; a grinder arm which is operative on the front side of the chassis and provided on an outer end with a grinder, and which is connected on another outer end to the chassis by means of a rotating head; a motor for driving at least the grinder.

### Prior art

Such stump grinders are known. An example of a known stump grinder is described in the Belgian patent BE 1017545 in the name of applicant. The stump grinder known from BE 1017545 has a chassis on which a rotary platform is provided in the form of a rotatable sub-frame, this rotary platform being mounted on the chassis for rotation around a vertical axis. The grinder arm is connected tiltably to the rotary platform and the motor is mounted on the rotary platform by means of a rack and pinion configuration. Stump grinders are further known in which a piston cylinder assembly is used to move the grinder arm.

### Summary of the invention

Embodiments of the invention have the object of providing a stump grinder which allows the movement of the grinder arm to be properly controlled both in respect of moving the grinder arm up and downward and in respect of moving the grinder arm reciprocally, and which is compact at the same time.

The invention is distinguished for this purpose according to a first aspect in that the rotating head is provided on a front side of the chassis and that the rotating head comprises a first rotating cylinder and a second rotating cylinder, wherein the first rotating cylinder is mounted for moving the grinder arm up and downward round a horizontal axis and the second rotating cylinder is mounted for pivoting the grinder arm round an upright axis, i.e. a vertical or inclining axis.

A very compact rotating head is in this way obtained at the front of the machine, wherein the motor and control can be provided on the chassis. The use of rotating cylinders has the advantage that the rotation can be properly controlled and that the grinder arm is precisely positionable relative to a stump for grinding, and that little space is necessary at the front of the machine.

In an advantageous embodiment the rotating head comprises a carrier, and the second rotating cylinder has a cylinder housing mounted on a front side of the chassis and a vertical shaft part mounted on the carrier. The first rotating cylinder has a first cylinder housing mounted on the carrier and a horizontal shaft part mounted on the grinder arm. Such an embodiment has the advantage that the upright shaft always remains vertically oriented. It is however also possible to connect the cylinder housing of the first rotating cylinder to the front side of the chassis and to mount the cylinder housing of the second rotating cylinder on the carrier. In this latter case the upright shaft of the second rotating cylinder will take up different inclining positions, depending on the position of the first rotating cylinder.

According to an advantageous embodiment, the carrier comprises a bracket structure with an upper flange, a lower flange and an upward oriented connecting flange between the upper flange and the lower flange, wherein the shaft part of the second rotating cylinder is mounted between the upper flange and the lower flange and wherein the first cylinder housing is mounted on the connecting flange. Such a construction results in an exceptionally compact rotating head.

According to an advantageous embodiment, the motor is attached fixedly to the chassis.

The first and second rotating cylinders are preferably hydraulic rotating cylinders, for instance hydraulic rotating cylinders with a helical gear transmission. According to a particularly advantageous embodiment of the first and second rotating cylinders, the shaft part is provided on an outer end with a torsion flange and a fixing rod runs through the shaft for the purpose of fixing the other end of the rotating cylinder. These rotating cylinders can however also be embodied as gear rack cylinders or rotary wing cylinders.

The distance between the horizontal axis of the first rotating cylinder and the upright axis of the second rotating cylinder is preferably less than 70 cm, more preferably less than 50 cm, and still more preferably less than 35 cm. Through the use of rotating cylinders this distance can be kept very small and a very compact rotating head can be obtained.

According to a preferred embodiment, the stump grinder further comprises setting means for setting an angle of rotation of the grinder arm; coupling means between the second rotating cylinder and the setting means, and a control. The coupling means are configured to transmit a signal to the control when the set angle of rotation is reached, and the control is configured to automatically change the direction of rotation of the second rotating cylinder when a signal is received from the coupling means. The control can in this way automatically move the grinder arm reciprocally in accordance with the set angle of rotation.

The setting means are preferably configured to set a left and a right angle of rotation. The coupling means are then configured accordingly in order to transmit a signal to the control when the set left angle of rotation is reached and when the set right angle of rotation is reached, such that the direction of rotation of the second rotating cylinder is changed when the extreme left position is reached and when the extreme right position is reached.

In an exemplary embodiment the setting means comprise a first and a second adjustable knob, and provided on a rear wall of the stump grinder is a guide channel in which the first and second knob are displaceable for the purpose of setting respectively the left and right angle of rotation. Robust mechanical setting means are in this way provided which allow a user to easily set the desired left and right angle, which can differ from each other. In such an embodiment the coupling means can comprise on an inner side of the rear wall a guide element and a carriage mounted thereon, which carriage is movable along the guide element. Provided between the carriage and the second rotating cylinder is a coupling which is such that a rotation of the second rotating cylinder causes a movement of the carriage along the guide element, wherein the movement of the carriage changes direction when the direction of rotation of the second rotating cylinder is reversed. The carriage can then be further provided with detection means configured to detect the first knob and the second knob and to transmit a signal to the control upon detection of the first knob or the second knob. The detection means can for instance comprise a tiltable arm, and the first and second knob can be provided with a stop which protrudes on the inner side of the rear wall, wherein the tiltable arm is provided on the carriage such that it tilts when it reaches the stop of the first knob and when it reaches the stop of the second knob. According to another variant, the detection means could comprise distance sensors which transmit a signal when the distance to the first knob or to the second knob is less than a determined threshold value. According to a possible embodiment, the coupling between the carriage and the second rotating cylinder comprises a first and second cable, and a rotating disc to which the first and second cable are attached, wherein the rotating disc is mounted so as to be rotated synchronously with the movement of the second rotating cylinder. The rotating disc can for instance be driven by the second rotating cylinder, for instance via a belt or chain.

According to a preferred embodiment, the control comprises a first set of valves for controlling the first rotating cylinder for the purpose of moving the grinder arm upward/downward, first control electronics for controlling the first set of valves, a second set of valves for controlling the second rotating cylinder for the purpose of pivoting the grinder arm to the left/right, and second control electronics for automatically controlling the second set of valves. The coupling means are then preferably coupled to the second control electronics such that when the signal is transmitted the second control electronics control the second set of valves such that the direction of rotation of the second rotating cylinder is changed.

In a further developed embodiment the control further comprises a dosing unit and a third set of valves for controlling the dosing unit. The dosing unit and the third set of valves are configured to automatically adjust the first rotating cylinder, and the second control electronics are further configured to control the third set of valves, this such that, when the signal is transmitted, the dosing unit adjusts the first rotating cylinder such that the grinder arm is moved a distance downward.

In an exemplary embodiment the displacing means comprise caterpillar tracks.

The stump grinder further preferably comprises a first tank and a second tank for storing a hydraulic liquid, wherein the first and the second tank are in fluid connection with each other; a cooling for cooling hydraulic liquid; hydraulic motors for driving the displacing means; a travel pump for pumping hydraulic liquid from the first tank to the hydraulic motors for the purpose of driving the displacing means, and from there to the cooling and back to the second tank; and a rotating cylinder pump for pumping hydraulic liquid from the first tank to the first and second rotating cylinder, and from there to the cooling and back to the second tank. The stump grinder preferably further comprises a hydraulic grinder motor and a grinder pump for pumping hydraulic liquid from the first tank to the hydraulic grinder motor for the purpose of driving the grinder, and from there back to the second tank.

A user interface can further be provided on the rear side of the stump grinder. The user interface is preferably provided with first operating means, for instance a button, for setting a manual operating mode of the grinder arm or an automatic operating mode of the grinder arm, and with second operating means, for instance a number of buttons, for moving the grinder arm up and downward and reciprocally when the first operating means are set to the manual operating mode. An arm with a steering device can further be provided on the rear side of the stump grinder for pushing forward and displacing of the stump grinder by a user.

### Brief description of the figures

The present invention will be further elucidated on the basis of a number of by no means limitative exemplary embodiments with reference to the accompanying drawings, in which:
Figure 1 is a perspective view of an embodiment of a stump grinder according to the invention as seen from the front side of the machine;
Figure 2 is a perspective view of the embodiment of figure 1 as seen from the rear side of the machine;
Figure 3 is a perspective detail view of the rotating head and grinder arm of the embodiment of figure 1;
Figure 4 shows a hydraulic diagram of an embodiment of a stump grinder according to the invention;
Figure 5 shows an electrical circuit diagram of an embodiment of a stump grinder according to the invention;
Figures 6A and 6B respectively illustrate schematically a cross-section and side view of coupling means between the vertical rotating cylinder and the setting means in an embodiment according to the invention.

### Description of exemplary embodiments

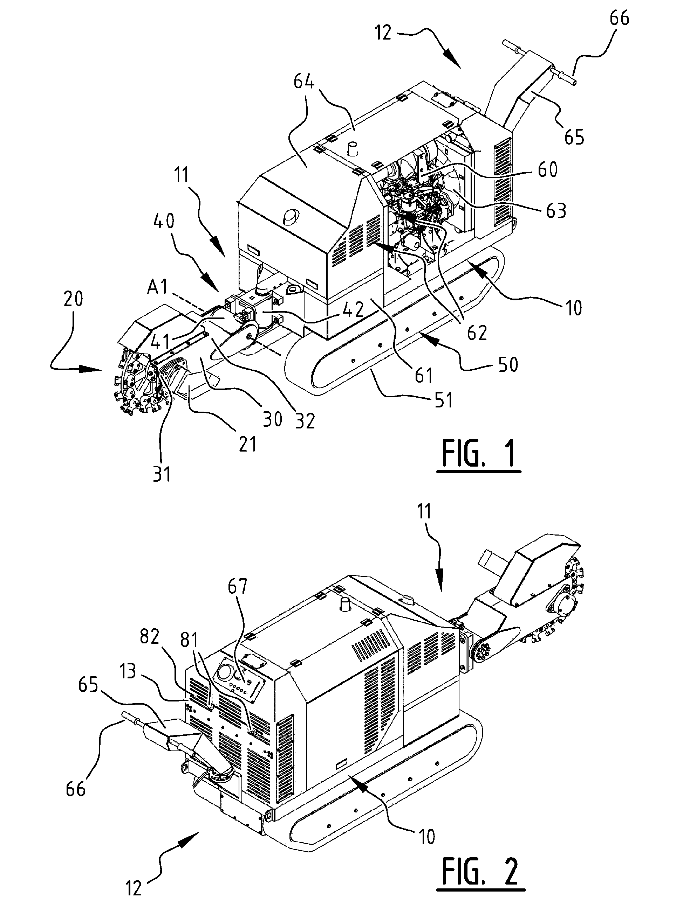

Figures 1-3 illustrate by way of example an embodiment of a stump grinder according to the invention. The stump grinder comprises a chassis 10 displaceable on displacing means 50, a grinder arm 30 provided on an outer end 31 with a grinder 20, and a motor 60 for driving the grinder 20 and displacing means 50. Chassis 10 has a front side 11 and a rear side 12, which are defined taking into account the forward direction of travel of the machine. Grinder arm 30 is operative on front side 11 of chassis 10. Grinder arm 30 is connected at another outer end 32 to front side 11 of chassis 10 by means of a rotating head 40.

Rotating head 40 is provided on front side 11 of chassis 10. Rotating head 40 comprises a first rotating cylinder 41 and a second rotating cylinder 42. The first rotating cylinder 41 is mounted for the purpose of moving grinder arm 30 up and downward round a horizontal axis A1 and the second rotating cylinder 42 is mounted for the purpose of pivoting the grinder arm round a vertical axis A2.

In the illustrated embodiment rotating head 40 comprises a carrier 43 and the second rotating cylinder 42 has a vertical shaft part 44 which is mounted on carrier 43. Carrier 43 is formed as a bracket with an upper flange, a lower flange and a connecting piece. The second rotating cylinder 42 is mounted between the upper flange and the lower flange of carrier 43. The second rotating cylinder 42 further has a second cylinder housing 45 mounted on a front side 11 of chassis 10. The first rotating cylinder 41 has a first cylinder housing 46 which is mounted on the connecting piece of carrier 43 and has a horizontal shaft part 47 which is mounted on grinder arm 30. In the illustrated variant the first and second cylinder housings 46, 45 are welded to respective mounting blocks 48, 49, which are in turn fixed respectively to carrier 43 and to a front side of chassis 10 using bolts. The skilled person will appreciate that other techniques can be used to mount cylinder housings 46, 45, for instance making use of clamping brackets and the like. The distance between horizontal axis A1 and vertical axis A2 is preferably smaller than 50 cm.

In the illustrated variant grinder arm 30 is mounted on the first rotating cylinder 41, which has a horizontal axis. It is however also possible to mount the grinder arm on a rotating cylinder with vertical axis, which is then in turn connected to a rotating cylinder with a horizontal axis which is mounted on the front side of the chassis.

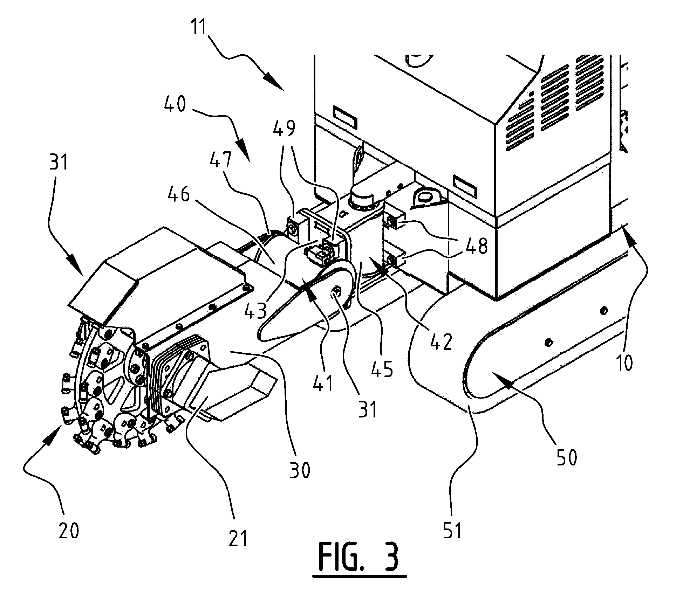

In a preferred embodiment the first and second rotating cylinders 41, 42 are embodied as hydraulic rotating cylinders with a preferably helical gear transmission. These rotating cylinders 41, 42 can however also be embodied as gear rack cylinders or rotary wing cylinders. According to an advantageous embodiment of the first and second rotating cylinders 41, 42, the shaft is provided on an outer end with a torsion flange 47, 44, and a fixing rod runs through the shaft for the purpose of fixing the other end of rotating cylinder 41, 42. For the second rotating cylinder 42 the torsion flange 44 is mounted on the upper flange of carrier 43 (figure 3) and for the first rotating cylinder 41 the torsion flange 47 is mounted on a connecting flange of grinder arm 30. For the first rotating cylinder 41 the other end is fixed at 31, and for the second rotating cylinder 42 this can be realized in similar manner on the underside of rotating cylinder 42 (not shown in the figures).

In the illustrated embodiment the displacing means 50 comprise two caterpillar tracks 51 which are driven over a set of wheels. According to a variant, the displacing means could also comprise two axles, each with two or more wheels.

Motor 60 is attached fixedly to chassis 10. Motor 60 is preferably a combustion engine. Preferably further provided on chassis 10 is a hydraulic circuit 62, a tank for hydraulic liquid 61, a cooling 63 for cooling hydraulic liquid, and the like. These components are preferably covered by a number of hoods 64, wherein one motor hood is omitted in figure 1 for the sake of clarity. Motor 60 is used, among other purposes, to drive displacing means 50, to drive grinder 20 via a hydraulic grinder motor 21, and to drive the first and second rotating cylinders 41, 42.

Provided on the rear side of the stump grinder is a user interface 67. User interface 67 is provided with first operating means for setting a manual operating mode of the grinder arm or an automatic operating mode of the grinder arm, and with second operating means for moving the grinder arm upward and downward and reciprocally when the first operating means are set to the manual operating mode. An arm 65 with a steering device 66 is further provided on the rear side of the stump grinder for pushing forward and displacing of the stump grinder by a user.

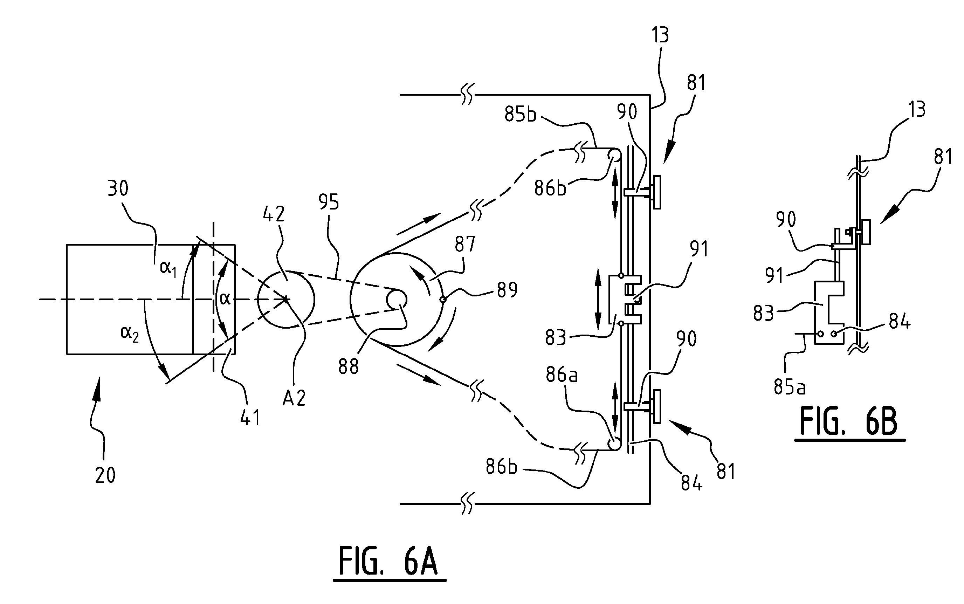

Grinder arm 30 can move up and downward by controlling the first rotating cylinder 41 between a first outermost position, in which grinder arm 30 preferably stands roughly vertically, and a second outermost position in which grinder 20 preferably lies below the ground surface. Grinder arm 30 can further pivot to the left and right between an extreme left position and an extreme right position. These extreme left and right positions are preferably adjustable. Figures 6A and 6B illustrate a possible embodiment in which the extreme left and right positions of grinder arm 30 are adjustable.

Setting means for setting an angle of rotation are provided for this purpose on rear side 12 of chassis 10. These setting means take the form here of two knobs 81 which are horizontally displaceable and fixable in a slot 13 provided in a rear wall 13 attached to chassis 10, see figure 2 and figure 6A, which shows a partially schematic horizontal cross-section of the machine. A carriage 83 is reciprocally movable over a guide rod 84 on the inner side of rear wall 13. The reciprocal movement is caused by cables 85a, 85b which are guided via guide rollers 86a, 86b to a rotatably mounted disc 87 with a shaft 88. Cables 85a, 85b are guided along the periphery of disc 87 and are fixed at a point 89. Shaft 88 is coupled to the second rotating cylinder 42, for instance by means of a belt or chain 95. A movement of grinder arm 30 to the left and then to the right will thus cause a reciprocal movement of carriage 83. Knobs 81 are provided with stop means 90 which are arranged in order to co-act with a tiltable arm 91 which is connected to carriage 83. The tilting of arm 91 causes a control signal which ensures that the direction of rotation of the second rotating cylinder is reversed, whereby the movement of carriage 83 also changes direction. A user of the stump grinder can in this way thus set the desired angular range α in simple manner using knobs 81, wherein a different setting is possible for a right angular range α1 relative to the forward direction of travel and for a left angular range α2 relative to a forward direction of travel, see figure 6A, wherein the overall angular range α is equal to the sum of the left angular range α2 and the right angular range α1. The components 83, 85a, 85b, 87, 88, 95 thus form coupling means between the second rotating cylinder 42 and setting means 81, and are configured to transmit a signal to a control when the set angle of rotation α1 or α2 is reached. The control of the second rotating cylinder 42 is further configured to control the second rotating cylinder 42 such that grinder arm 30 can automatically pivot reciprocally round vertical axis A2, wherein the direction of rotation is changed when the signal from the coupling means is received, and wherein grinder arm 30 is lowered a little after each movement to the left and/or during each movement to the right, see below.

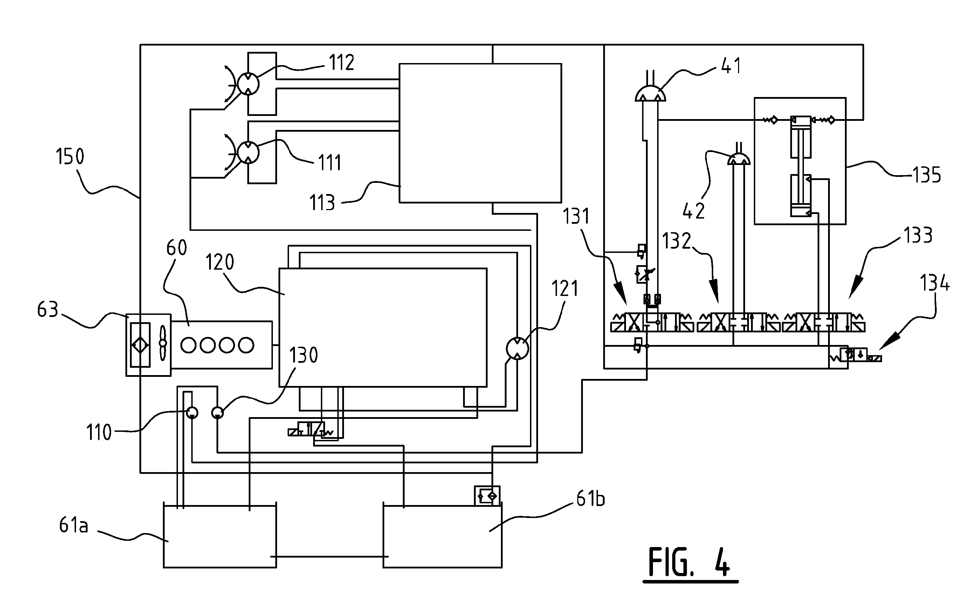

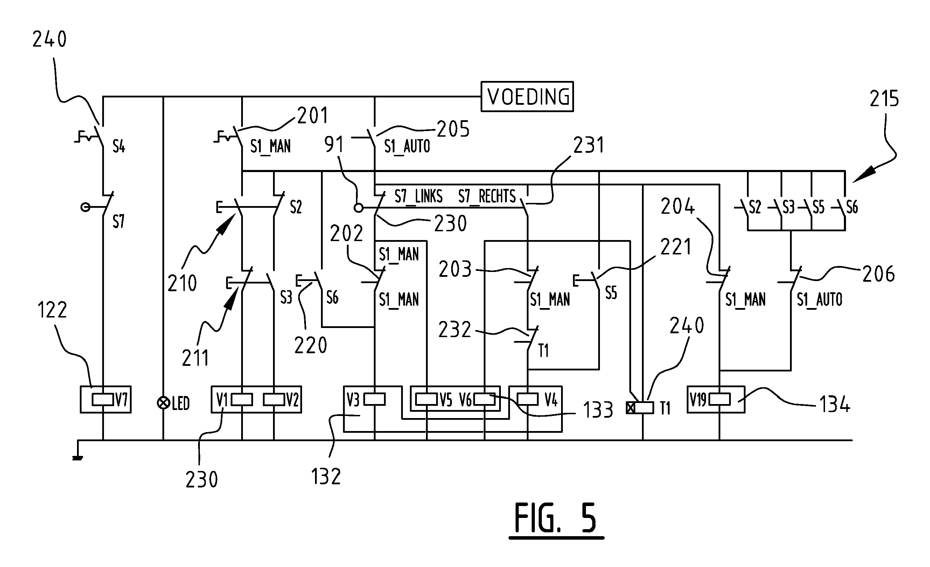

A possible embodiment of the hydraulic circuit and the electronic control for controlling, among other parts, rotating cylinders 41, 42 and grinder engine 121 will now be discussed in detail with reference to figures 4 and 5.

Figure 4 is a hydraulic diagram. Figure 4 shows the motor 60 which is used to power a pump 110 for pumping hydraulic liquid from a first liquid tank 61a to caterpillar motors 111, 112 of displacing means 50; a pump 120 for pumping hydraulic liquid from the first liquid tank 61a to grinder motor 121; and a pump 130 for pumping hydraulic liquid from the first liquid tank 61a to the first and second rotating cylinders 41, 42. The greater part of the hydraulic liquid is fed back via return conduit 150 through cooling 63 to a second liquid tank 61b. The second liquid tank 61b is connected to the first liquid tank 61a. According to a variant, one tank can be provided instead of two tanks. Switch-on of grinder pump 120, and so of grinder engine 121, is controlled by grinder valve 122. The driving of caterpillar motors 111, 112 is controlled by travel valves 113. Switch-on and control of the first and second rotating cylinder 41, 42 is controlled by valve blocks 131-134 and by a dosing unit 135 which in the illustrated embodiment comprises two piston cylinder assemblies with a shared piston rod.

Figure 5 shows the electrical circuit diagram of the control circuit. The control circuit is powered by a power supply 250 in which a number of safeguards (not shown) can be incorporated which switch off power supply 250, for instance when hoods 64 of the housing on chassis 10 are open. The operating means of the stump grinder preferably comprise a setting means such as a knob or a handle which can be operated by a user for the purpose of setting a manual mode S1_MAN or an automatic mode S1_AUTO. When the manual mode S1_MAN is set, switch 201 is closed and switches 202, 203 and 204 are opened; switch 205 is open and switch 206 closed. The lines with switches for manual operation of the first and second rotating cylinder 41, 42 are hereby powered, see below.

The operating means of the stump grinder preferably further comprise setting means such as knobs which can be operated by a user for the purpose of moving grinder arm 30 up and downward in the manual mode S1_MAN. These setting means for moving the grinder arm up and downward are coupled to switches 210, 211 for actuating valves 131 for the purpose of controlling the movement of the first rotating cylinder 41. The operating means of the stump grinder preferably also comprise setting means such as knobs which can be operated by a user for the purpose of reciprocally pivoting grinder arm 30 in the manual mode S1_MAN. These setting means for reciprocally moving grinder arm 30 are coupled to switches 220, 221 for actuating valves 132 for the purpose of controlling the movement of the second rotating cylinder 42. The setting means for moving grinder arm 30 up and downward and reciprocally are further coupled to switches 215, which are connected in series to switch 206 such that pressure valve 134 is actuated when grinder arm 30 is moved.

When the automatic mode S1_AUTO is set, switch 205 is closed and 206 is opened; switch 201 is then open and switches 202, 203 and 204 are closed. Switches 230, 231 are operated by a control signal coming from arm 91 of the coupling means between setting means 81 and the second rotating cylinder 42 (see figures 6A and 6B). When the extreme left position is reached switch 230 is closed and switch 231 opened, whereby valve V3 of valve block 132 is actuated in order to move grinder arm 30 to the right. When the extreme right position is reached switch 230 is opened and switch 231 is closed, whereby valve V4 of valve block 132 is actuated in order to move grinder arm 30 to the left. In order to ensure that grinder arm 30 first drops downward a little before moving to the left when the extreme right position is reached, a dosing unit 135, a dosing valve block 133, a timer device 240 and a switch 232 coupled to timer device 240 are provided. Timer device 240 is activated when switch 231 is closed (extreme right position is reached). Following a predetermined lapse of time from activation, as timed by timer device 240, switch 232 is closed so that the movement to the left starts only after the predetermined lapse of time from the closing of valve 231. As long as valve 232 is open, valve V6 of dosing valve block 133 is actuated, whereby the piston of dosing unit 135 is displaced such that the first rotating cylinder 41 lowers the grinder arm 30 a little. The movement of grinder arm 30 to the left then begins when switch 232 is closed. In the variant of figure 5 grinder arm 30 is only allowed to drop at a transition from right to left, and not at the transition from left to right. The skilled person will appreciate that this diagram can be modified in simple manner in order to also lower the grinder arm a little at the transition from left to right.

The operating means of the stump grinder further preferably comprise a setting means such as a knob which can be operated by a user for the purpose of operating grinder 20. This setting means is coupled to switch 240.

The automatic grinding is usually carried out as follows. The left and right angles of rotation α1, α2 are first set using knobs 82. The grinder arm is then lowered to a position just above the stump for grinding in the manual mode. The automatic mode is then set such that grinder arm 30 automatically pivots reciprocally according to the set angles of rotation, wherein the grinder arm is lowered a little after each reciprocal movement, i.e. either after each movement to the left or after each movement to the left and after each movement to the right of grinder arm 30.

The skilled person will appreciate that the invention is not limited to the above illustrated exemplary embodiments, and that many variants and modifications can be envisaged within the scope of the invention, which is defined solely by the following claims.

## Claims

1. Stump grinder, comprising:
- a chassis displaceable on displacing means and having a front side;
- a grinder arm which is operative on the front side of the chassis and provided on an outer end with a grinder, and which is connected on another outer end to the chassis by means of a rotating head;
- a motor for driving the grinder;
**characterized in that** the rotating head is provided on a front side of the chassis and that the rotating head comprises a first rotating cylinder and a second rotating cylinder, wherein the first rotating cylinder is mounted for moving the grinder arm up and downward round a horizontal axis and the second rotating cylinder is mounted for pivoting the grinder arm round a vertical or inclining axis.

2. Stump grinder as claimed in claim 1, **characterized in that** the rotating head comprises a carrier, wherein the second rotating cylinder has a second cylinder housing mounted on a front side of the chassis; and a vertical shaft part mounted on the carrier;
wherein the first rotating cylinder has a first cylinder housing mounted on the carrier and a horizontal shaft part mounted on the grinder arm.

3. Stump grinder as claimed in claim 2, **characterized in that** the carrier comprises a bracket structure with an upper flange, a lower flange and an upward oriented connecting flange between the upper flange and the lower flange; wherein a shaft part of the second rotating cylinder is mounted between the upper flange and the lower flange; and wherein the first cylinder housing is mounted on the connecting flange.

4. Stump grinder as claimed in any of the foregoing claims, **characterized in that** the motor is attached fixedly to the chassis.

5. Stump grinder as claimed in any of the foregoing claims, **characterized in that** the first and second rotating cylinders are hydraulic rotating cylinders.

6. Stump grinder as claimed in any of the foregoing claims, **characterized in that** the distance between the horizontal axis (A1) of the first rotating cylinder and the vertical axis (A2) of the second rotating cylinder is less than 70 cm, preferably less than 50 cm, and still more preferably less than 35 cm.

7. Stump grinder as claimed in any of the foregoing claims, **characterized in that** the first and second rotating cylinders are each connected by means of two hydraulic conduits to a hydraulic control circuit mounted on the chassis.

8. Stump grinder as claimed in any of the foregoing claims, further comprising:
setting means for setting an angle of rotation of the grinder arm;
coupling means between the second rotating cylinder and the setting means, which coupling means are configured to transmit a signal to a control when the set angle of rotation is reached; and
a control which is configured to automatically change the direction of rotation of the second rotating cylinder when a signal is received from the coupling means.

9. Stump grinder as claimed in claim 8, **characterized in that** the setting means are configured to set a left and a right angle of rotation; and that the coupling means are configured to transmit a signal in each case to the control when the set left angle of rotation is reached and when the set right angle of rotation is reached.

10. Stump grinder as claimed in claim 9, **characterized in that** the setting means comprise a first and a second adjustable knob, and that provided on a rear wall of the stump grinder is a guide channel in which the first and second knob are displaceable for the purpose of setting respectively the left and right angle of rotation.

11. Stump grinder as claimed in claim 10, **characterized in that** the coupling means can comprise on an inner side of the rear wall a guide element and a carriage mounted thereon, which carriage is movable along the guide element, wherein provided between the carriage and the second rotating cylinder is a coupling which is such that a rotation of the second rotating cylinder causes a movement of the carriage along the guide element, wherein the movement changes direction when the direction of rotation of the second rotating cylinder is reversed; and wherein the carriage is provided with detection means configured to detect the first knob and the second knob and to transmit a signal to the control upon detection of the first knob or the second knob.

12. Stump grinder as claimed in claim 11, **characterized in that** the detection means comprise a tiltable arm (91), and that the first and second knob are provided with a stop which protrudes on the inner side of the rear wall; wherein the tiltable arm is provided on the carriage such that it tilts when it reaches the stop of the first knob and when it reaches the stop of the second knob.

13. Stump grinder as claimed in claim 11 or 12, **characterized in that** the coupling between the carriage and the second rotating cylinder comprises a first and second cable, and a rotating disc to which the first and second cable are attached; wherein the rotating disc is mounted so as to be rotated synchronously with the movement of the second rotating cylinder.

14. Stump grinder as claimed in any of the foregoing claims, further comprising:
at least one tank for storing a hydraulic liquid, wherein the first and the second tank are in fluid connection with each other;
a cooling for cooling hydraulic liquid;
hydraulic motors for driving the displacing means;
a travel pump for pumping hydraulic liquid from the at least one tank to the hydraulic motors for the purpose of driving the displacing means, and from there to the cooling and back to the at least one tank; and
a rotating cylinder pump for pumping hydraulic liquid from the at least one tank to the first and second rotating cylinder, and from there to the cooling and back to the at least one tank.

15. Stump grinder as claimed in claim 14, further comprising:
a hydraulic grinder motor;
a grinder pump for pumping hydraulic liquid from the at least one tank to the hydraulic grinder motor for the purpose of driving the grinder, and from there back to the at least one tank.
